(19) Europäisches Patentamt / European Patent Office / Office européen des brevets

(11) **EP 4 213 082 A1**

(12) **EUROPEAN PATENT APPLICATION**

(43) Date of publication:
**19.07.2023 Bulletin 2023/29**

(21) Application number: **22198686.2**

(22) Date of filing: **29.09.2022**

(51) International Patent Classification (IPC):
**G06Q 10/0631** (2023.01) **G06Q 50/04** (2012.01)

(52) Cooperative Patent Classification (CPC):
**G06Q 10/06316; G06Q 50/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.01.2022 JP 2022004781**

(71) Applicant: **FUJITSU LIMITED**
**Kawasaki-shi, Kanagawa 211-8588 (JP)**

(72) Inventor: **Shimada, Daichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **PLANNING PROGRAM, PLANNING METHOD, AND INFORMATION PROCESSING APPARATUS**

(57)    A planning program that causes at least one computer to execute a process, the process includes generating a plurality of priority order patterns in which priority orders are assigned to a plurality of work groups, when processes selected from the plurality of work groups are sequentially performed on each of a plurality of objects; specifying an order of processes in the work group for each of the priority orders according to the priority orders of the plurality of priority order patterns; and specifying an order of the plurality of objects corresponding to the specified order of processes.

## FIG. 1

**Description**

FIELD

The embodiments discussed herein are related to a planning program, a planning method, and an information processing apparatus.

BACKGROUND

A step planning for sequentially performing works on a plurality of types of objects is performed.
Japanese Laid-open Patent Publication No. 4-281556, Japanese Laid-open Patent Publication No. 6-110901, and Japanese Laid-open Patent Publication No. 2008-198129 are disclosed as related art.

[TECHNICAL PROBLEM]

For example, there is a case where a plurality of products are sequentially fed into one work line in accordance with a predetermined order, and each work selected from a plurality of work groups is performed on each product. In this case, in order to equalize a frequency of each work, it is considered to equalize a work pattern by using a target tracking method. Meanwhile, in this case, local congestion may occur for each work. It is considered to use a method of specifying a process order in a work line (also referred to as a feeding order to the work line) by introducing a weighting coefficient for each work or the like. Meanwhile, the weighting coefficient and an output result may not coincide with an assumption of a user, and the number of man-hours of the user is likely to be increased.
In one aspect, it is an object to provide a planning program, a planning method, and an information processing apparatus capable of planning a feeding order to a work line while suppressing the number of man-hours of a user.

[ADVANTAGEOUS EFFECTS OF INVENTION]

It is possible to provide a planning program, a planning method, and an information processing apparatus capable of planning a feeding order to a work line while suppressing the number of man-hours of a user.

SUMMARY

[SOLUTION TO PROBLEM]

According to an aspect of the embodiments, a planning program that causes at least one computer to execute a process, the process includes generating a plurality of priority order patterns in which priority orders are assigned to a plurality of work groups, when processes selected from the plurality of work groups are sequentially performed on each of a plurality of objects; specifying an order of processes in the work group for each of the priority orders according to the priority orders of the plurality of priority order patterns; and specifying an order of the plurality of objects corresponding to the specified order of processes.

BRIEF DESCRIPTION OF DRAWINGS

FIG. 1 is a diagram describing an outline of multi-type mixed-flow production;
FIG. 2 is a diagram illustrating a work order in a multi-type mixed-flow work method;
FIGs. 3A and 3B are diagrams illustrating a feeding order to a work line;
FIGs. 4A to 4C are diagrams illustrating a target tracking method;
FIG. 5 is a diagram describing a principle;
FIG. 6 is a diagram illustrating a specific description for specifying a solution in a priority order pattern;
FIG. 7A is a block diagram illustrating an overall configuration of an information processing apparatus according to an embodiment 1, and FIG. 7B is a block diagram illustrating a hardware configuration of the information processing apparatus;
FIG. 8 is a flowchart illustrating an example of a planning process executed by the information processing apparatus;
FIG. 9 is a flowchart illustrating an example of a planning process executed by the information processing apparatus;
FIG. 10 is a diagram illustrating contents of prod2cond_map;
FIG. 11 is a diagram illustrating contents of cond_group;

FIG. 12 is a diagram illustrating the priority order pattern;
FIGs. 13A and 13B are diagrams describing another example of the method of generating the priority order pattern; and
FIG. 14 is a diagram describing an example in which a result output by an output unit is output to a traveling machine and a feeding device.

DESCRIPTION OF EMBODIMENTS

Before a description of embodiments, an overview of multi-type mixed-flow production will be described.

Inventories of various components are stored in a wide space in a warehouse. Each component for producing a plurality of types of products is stored in such a warehouse. Each component case in which a plurality of identical components are accommodated is accommodated in a predetermined component shelf. The components desirable for work in a factory are picked up in the warehouse.

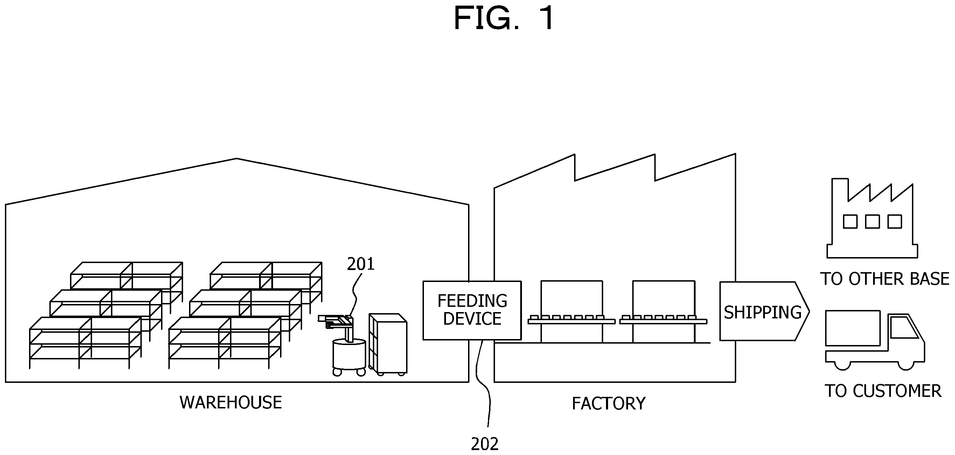

During the picking work of these components, a worker collects the components from the component case on each component shelf, or a traveling machine (automatic guided vehicle (AGV)) automatically collects the components, in some cases. For example, as illustrated in FIG. 1, a traveling machine 201 travels to a component shelf accommodating a component designated to be collected and picks up the component. For each product, one or more components are picked. At least some of the desirable components are different for each product type.

For each product type, a set of desirable components is sequentially fed into a work line of a factory. Accordingly, work for producing each product is sequentially performed in the factory. For example, for each set of each product type picked by the traveling machine 201, a feeding device 202 sequentially feeds the set into the work line in accordance with a designated feeding order.

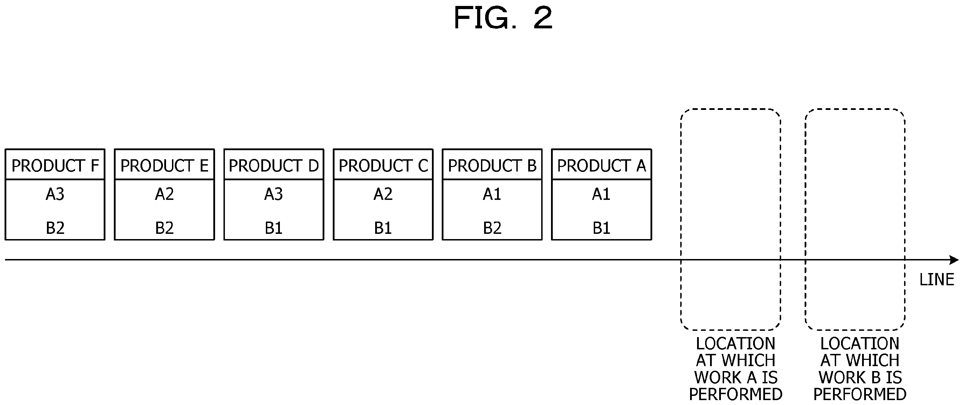

FIG. 2 is a diagram illustrating a work order in a multi-type mixed-flow work method. According to the multi-type mixed-flow work method, a plurality of types of products having different work patterns are sequentially fed into one work line in accordance with a predetermined order, and are sequentially moved over the work line. As an example, it is assumed that work is performed on a product A to a product F as the plurality of products having the different work patterns. Different work is performed for each of these products. For example, as illustrated in FIG. 2, it is assumed that, for each product, any of work A1, work A2, and work A3 included in a work group A is performed, and then one of work B1 and work B2 included in a work group B is performed.

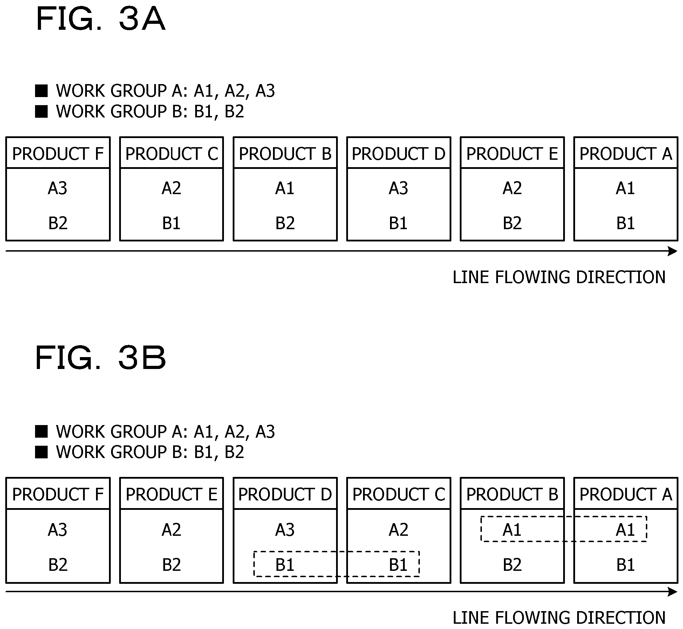

As illustrated in FIG. 3A, at least some of desirable works are different, for each product. On the other hand, some of the desirable works between a plurality of products overlap with each other. For example, the work A1 and the work B1 are sequentially performed on the product A. The work A2 and the work B2 are sequentially performed on the product E. The work A3 and the work B1 are sequentially performed on the product D. The work A1 and the work B2 are sequentially performed on the product B. The work A2 and the work B1 are sequentially performed on the product C. The work A3 and the work B2 are sequentially performed on the product F.

In the example illustrated in FIG. 3A, the product A, the product E, the product D, the product B, the product C, and the product F are fed into a work line in this order. According to this feeding order, the identical work is not performed on two consecutive products. Therefore, the identical work is not biased, so that a supply frequency of each component is distributed without being biased. When the identical work is completed without being repeated, the work is completed without work efficiency by the worker being decreased.

By contrast, in FIG. 3B, the product A, the product B, the product C, the product D, the product E, and the product F are fed into the work line in this order. According to this feeding order, the work A1 performed on the product A is continuously performed on the following product B. The work B1 performed on the product C is continuously performed on the following product D. In this case, the identical work is continuously performed on the two products, so that the supply frequency of each component is biased. Since the identical work has to be repeated, the work efficiency by the worker may be decreased.

It is desirable to reduce congestion of works to be performed, and equalize the frequency of the works. For example, it is considered to suppress the bias of the identical work pattern by using a target tracking method. The target tracking method is a method of selecting a work pattern having a high appearance probability for each index (feeding times), from each product.

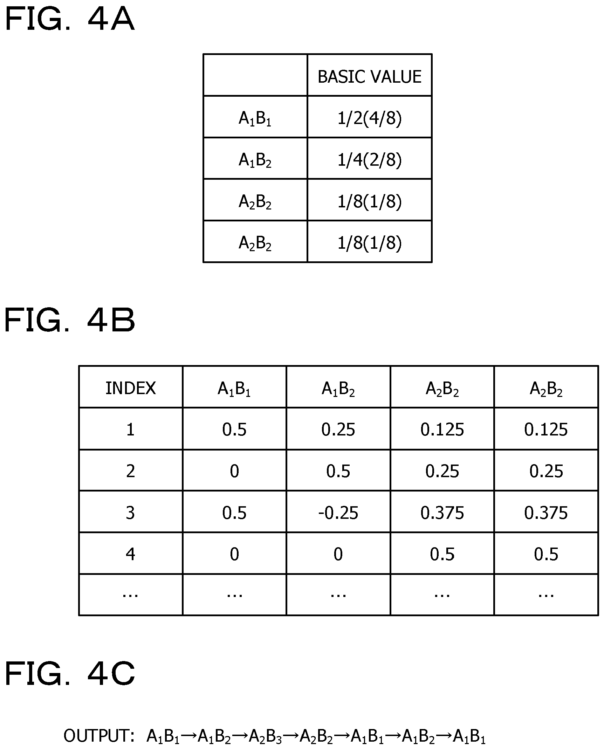

FIGs. 4A to 4C are diagrams illustrating the target tracking method. As an example, it is assumed that four products of the work pattern $A_1B_1$ on which the work A1 and the work B1 are to be performed are fed into a work line. It is assumed that two products of the work pattern $A_1B_2$ on which the work A1 and the work B2 are to be performed are fed into the work line. It is assumed that one product of the work pattern $A_2B_1$ on which the work A2 and the work B1 are to be performed is fed into the work line. It is assumed that one product of the work pattern $A_2B_2$ on which the work A2 and the work B2 are to be performed is fed into the work line. According to this target tracking method, a solution for the feeding order is obtained such that the identical work pattern is equalized without considering duplication of the work between the products.

As illustrated in FIG. 4A, first, a basic value of an appearance probability is calculated for each work pattern. The basic value of the appearance probability is a ratio of the number of products of each work pattern to the total number of products. Since the total number of products is 8, the basic value of the work pattern $A_1B_1$ is 4/8 = 1/2. The basic value of the work pattern $A_1B_2$ is 2/8 = 1/4. The basic value of the work pattern $A_2B_1$ is 1/8. The basic value of the work pattern $A_2B_2$ is 1/8.

For each feeding time, the appearance probability of each work pattern is calculated. The feeding time = 1 represents work of feeding a first product into a work line. The feeding times = n represents work of feeding an n-th product into the work line. The appearance probability is calculated as feeding times x basic value - (the number of times the work pattern is selected up to that time).

As illustrated in FIG. 4B, the feeding time = 1, and the appearance probability of the work pattern $A_1B_1$ is a basic value of 0.5. The appearance probability of the work pattern $A_1B_2$ is a basic value of 0.25. The appearance probability of the work pattern $A_2B_1$ is a basic value of 0.125. The appearance probability of the work pattern $A_2B_2$ is a basic value of 0.125. Since a work pattern having the highest appearance probability is selected in the target tracking method, a product having the work pattern $A_1B_1$ is selected as a first feeding product. At this point, the number of times the product of the work pattern $A_1B_1$ is selected is 1, and the number of times products of the work pattern $A_1B_2$, the work pattern $A_2B_1$, and the work pattern $A_2B_2$ are selected is 0.

When the feeding times = 2, and the appearance probability of the work pattern $A_1B_1$ is 0. The appearance probability of the work pattern $A_1B_2$ is 0.5. The appearance probability of the work pattern $A_2B_1$ is 0.25. The appearance probability of the work pattern $A_2B_2$ is 0.25. Therefore, a product having the work pattern $A_1B_2$ is selected as a second feeding product. At this point, the number of times the products of the work pattern $A_1B_1$ and the work pattern $A_1B_2$ are selected is 1, and the number of times the products of the work pattern $A_2B_1$ and the work pattern $A_2B_2$ are selected is 0.

When determining a feeding order of each product to the work line by the procedure in the same manner, for example, as illustrated in FIG. 4C, a feeding order of the work pattern $A_1B_1$, the work pattern $A_1B_2$, the work pattern $A_1B_1$, the work pattern $A_2B_3$, and the work pattern $A_2B_2$ is output. Although the work frequency is equalized to some extent in this order, the work A1 is continued three times with the feeding times of 1 to 3. A reason why the identical work may be continuously selected in this manner is that the identical work is included in a plurality of work patterns. For a work pattern of a large number of product types, the basic value of the appearance probability is high, so that the probability of being continuously selected is high.

It is conceivable to introduce a weighting coefficient for each work, and determine the order of each work pattern based on the weighting coefficient. Meanwhile, in this method, since a user has to set the weighting coefficient, the user has to reset the weighting coefficient every time the work pattern or the number of target products is changed. In this case, the weighting coefficient and an output result may not coincide with an assumption of the user, trial and error is desirable until the target output result is obtained, and the number of man-hours of the user is likely to be increased.

In the following embodiment, a configuration will be described in which a plurality of priority order patterns are generated for each work group, an optimum solution of a feeding order for each priority order pattern is specified, and the plurality of optimum solutions are presented to a user, so that the feeding order to a work line may be planned while suppressing the number of man-hours of the user.

[Embodiment 1]

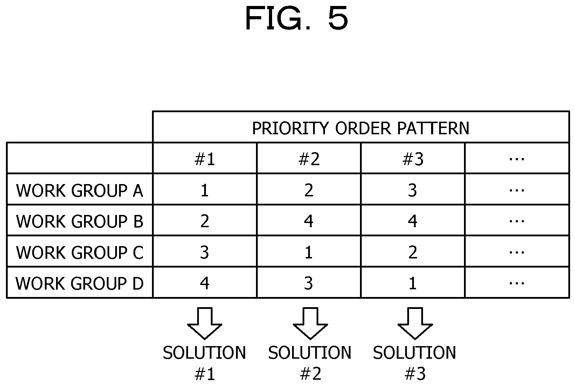

First, a principle will be described in which a plurality of priority order patterns are generated for each work group, an optimum solution of a feeding order for each priority order pattern is specified, and the plurality of optimum solutions are presented to a user. FIG. 5 is a diagram describing the principle described above.

As illustrated in FIG. 5, a plurality of priority order patterns in which a priority order is assigned to each work group are created. According to a priority order pattern #1, the work group A has a first priority order, the work group B has a second priority order, the work group C has a third priority order, and the work group D has a fourth priority order. According to a priority order pattern #2, the work group A has a second priority order, the work group B has a fourth priority order, the work group C has a first priority order, and the work group D has a third priority order.

Although the priority order pattern may be generated so as to cover all the priority orders, the priority order pattern may be generated for only some of all the priority orders. For example, the priority order pattern may be randomly generated.

A solution #1 of the feeding order is obtained with the priority order pattern #1. A solution #2 of the feeding order is obtained with the priority order pattern #2. A solution #3 in the feeding order is obtained with the priority order pattern #3. In this manner, by acquiring a solution for each priority order pattern while automatically changing the priority order pattern, and presenting the solution to the user, time and effort of the user is saved. For example, among the solutions obtained for the respective priority order patterns, only a solution in which a key performance indicator (KPI) satisfies a predetermined condition may be presented as an optimum solution.

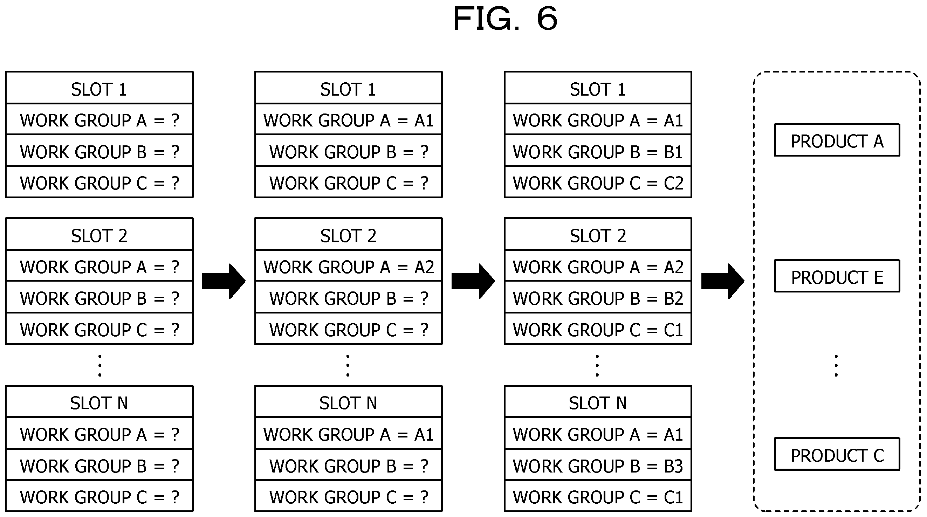

FIG. 6 is a diagram illustrating a more specific description for a solution in the priority order pattern #1. First, as illustrated in FIG. 6, as many slots as the number of products to be fed into a work line are created. The slot is a variable for storing a work pattern for each product. When the total number of products is N, a slot 1 to a slot N are created. At an initial state, work of each work group is yet to be determined in each slot.

In the priority order pattern #1, the work group A has a first priority order. Each work in the work group A is equalized by using a target tracking method. As an example, it is assumed that, in a work line, the work A1 is performed on six products, the work A2 is performed on four products, and the work A3 is performed on two products. A basic value of an appearance probability is calculated for each work. The basic value of the appearance probability is a ratio of the number of each work to the total number of products. Since the total number of products is 12, the basic value of the work A1 is 6/12 = 1/2. The basic value of the work A2 is 4/12 = 1/3. The basic value of the work A3 is 2/12 = 1/6. For each feeding time, the appearance probability of each work is calculated. The appearance probability is calculated as feeding times x basic value - (the number of times the work is selected up to that time). At each feeding time, work having a highest appearance probability is selected. The selection result is input to each slot.

In the priority order pattern #1, the work group B has a second priority order. Each work in the work group B is equalized by using a target tracking method. As an example, it is assumed that, in the work line, the work B1 is performed on six products, the work B2 is performed on four products, and the work B3 is performed on two products. A basic value of an appearance probability is calculated for each work. The basic value of the appearance probability is a ratio of the number of each work to the total number of products. Since the total number of products is 12, the basic value of the work B1 is 6/12 = 1/2. The basic value of the work B2 is 4/12 = 1/3. The basic value of the work B3 is 2/12 = 1/6. For each feeding time, the appearance probability of each work is calculated. The appearance probability is calculated as feeding times x basic value - (the number of times the work is selected up to that time). At each feeding time, work having a highest appearance probability is selected. A work pattern corresponding to the selection result is input to each slot.

Hereinafter, according to the priority order pattern #1, each work of the work group having the priority order of 3 or lower is equalized by the target tracking method. Therefore, in each slot, the work of each work group is specified. Next, the products on which the work pattern of each slot is to be performed are arranged in order. Accordingly, a solution for the priority order pattern #1 is obtained. Hereinafter, solutions for the priority order pattern #2 and the subsequent priority order patterns are obtained in the same manner. By presenting the solution for each priority order pattern to a user, the user may select a desired solution among the presented solutions.

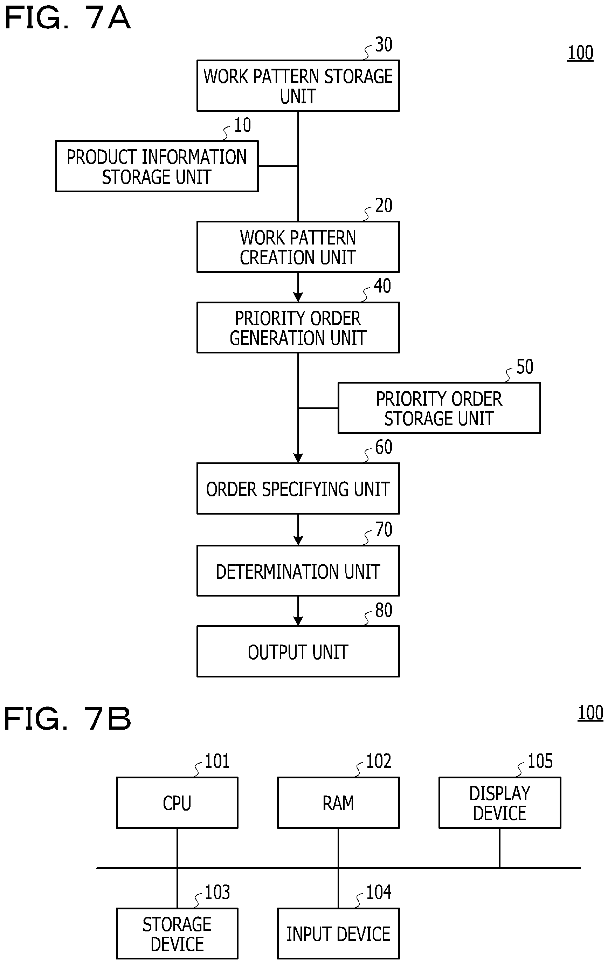

FIG. 7A is a block diagram illustrating an overall configuration of an information processing apparatus 100 according to an embodiment 1. As illustrated in FIG. 7A, the information processing apparatus 100 includes a product information storage unit 10, a work pattern creation unit 20, a work pattern storage unit 30, a priority order generation unit 40, a priority order storage unit 50, an order specifying unit 60, a determination unit 70, an output unit 80, and the like.

FIG. 7B is a block diagram illustrating a hardware configuration of the information processing apparatus 100. As illustrated in FIG. 7B, the information processing apparatus 100 includes a CPU 101, a random-access memory (RAM) 102, a storage device 103, an input device 104, a display device 105, and the like.

The CPU 101 is a central processing unit. The CPU 101 includes one or more cores. The RAM 102 is a volatile memory that temporarily stores a program to be executed by the CPU 101, data to be processed by the CPU 101, and the like. The storage device 103 is a nonvolatile storage device. As the storage device 103, for example, a read-only memory (ROM), a solid-state drive (SSD) such as a flash memory, a hard disk driven by a hard disk drive, or the like may be used. The storage device 103 stores a planning program. The input device 104 is an input device such as a keyboard or a mouse. The display device 105 is a display device such as a liquid crystal display (LCD). By the CPU 101 executing the planning program, the product information storage unit 10, the work pattern creation unit 20, the work pattern storage unit 30, the priority order generation unit 40, the priority order storage unit 50, the order specifying unit 60, the determination unit 70, and the output unit 80 are realized. Hardware such as dedicated circuits may be used as the product information storage unit 10, the work pattern creation unit 20, the work pattern storage unit 30, the priority order generation unit 40, the priority order storage unit 50, the order specifying unit 60, the determination unit 70, and the output unit 80.

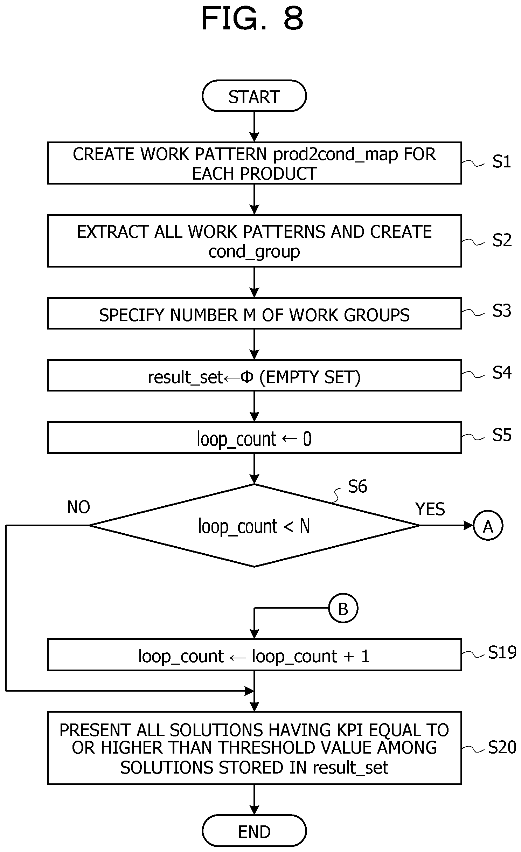

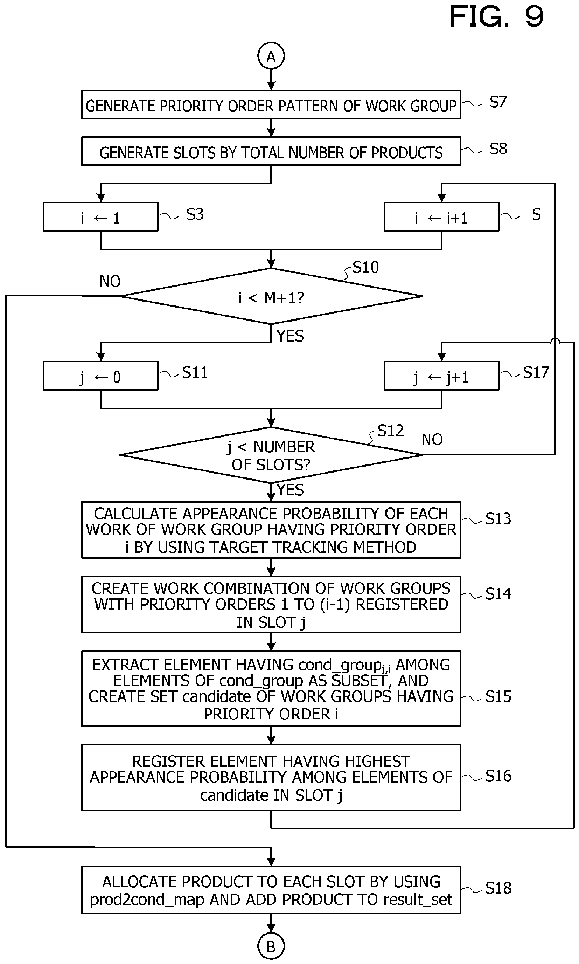

FIGs. 8 and 9 are flowcharts illustrating an example of a planning process executed by the information processing apparatus 100. The work pattern creation unit 20 acquires product information from the product information storage unit 10, and creates a work pattern, which is a combination of works desirable for each product (step S1). The product information includes the number of each product type and the total number of products included in each product type (total number of products). The product information includes the work desirable for each product. For example, a work pattern of a combination of the work A1, the work B3, and the work C2 is created for a certain product. The work pattern for each product is denoted as prod2cond_map. prod2cond_map is stored in the work pattern storage unit 30.

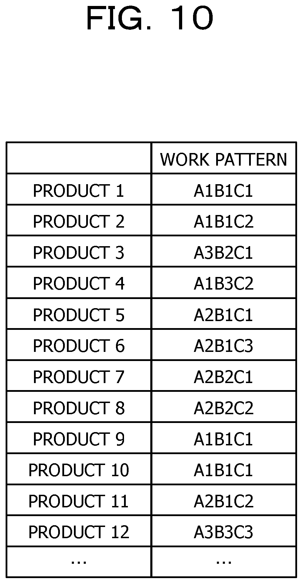

FIG. 10 is a diagram illustrating contents of prod2cond_map. As illustrated in FIG. 10, a work pattern, which is a combination of works to be performed on each product is defined. The identical work patterns are performed on a plurality of products, in some cases. For each work pattern, some of works are overlap with each other, and a part of work is different from each other, in some cases.

Next, the order specifying unit 60 refers to prod2cond_map to extract all the created work patterns (step S2).

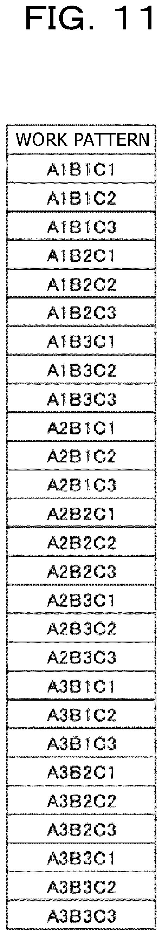

A group of the extracted work patterns is referred to as cond_group. cond_group is stored in the work pattern storage unit 30. FIG. 11 is a diagram illustrating contents of cond_group. As illustrated in FIG. 11, types of the work patterns are stored. In the example illustrated in FIG. 11, 27 types of work patterns are stored.

Next, the order specifying unit 60 refers to the content of cond_group stored in the work pattern storage unit 30, and specifies a number M of work groups (step S3). For example, in the example illustrated in FIG. 11, the work group A, the work group B, and the work group C are included. In this case, the number M of work groups is 3.

Next, the order specifying unit 60 creates an array result_set having elements corresponding to the total number of products, and sets the array result_set as an empty set (step S4). By sequentially inputting each product into each element of the array result_set, it is possible to create a feeding order of each product.

Next, the order specifying unit 60 sets a loop count loop_count to an initial value of 0 (step S5).

Next, the order specifying unit 60 determines whether or not the loop count loop_count is less than the maximum loop count N (step S6). By setting the maximum loop count N, an upper limit may be set for the number of loop processes.

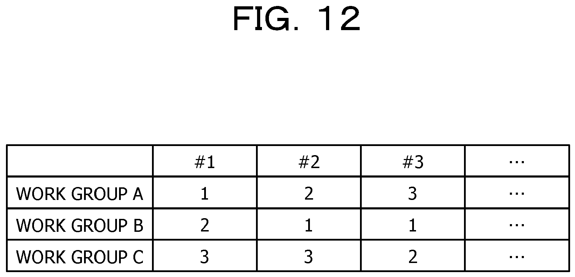

In a case where "Yes" is determined in step S6, the priority order generation unit 40 generates a priority order pattern of the work group (step S7). For example, the priority order generation unit 40 randomly generates the priority order pattern of each work group. The generated priority order pattern is stored in the priority order storage unit 50. FIG. 12 is a diagram illustrating an example of the priority order pattern. In the example illustrated in FIG. 12, the priority order of each work group is randomly generated.

Next, the order specifying unit 60 generates slots for the total number of products (step S8). In this state, work in each slot is not determined yet.

Next, the order specifying unit 60 substitutes 1 as an initial value of a variable i (step S9). The variable i is a variable representing a priority order of each work group in the priority order pattern.

Next, the order specifying unit 60 determines whether or not the variable i is smaller than M + 1 (step S10). With this process, it is possible to determine whether or not specification of each work of each work group is completed in each priority order pattern.

In a case where "Yes" is determined in step S10, the order specifying unit 60 substitutes 0 for a variable j (step S11). The variable j is used to determine the number of slots with which work of a work group having an i-th priority order is specified. In a state in which the work of the work group having the i-th priority order is not specified yet in any slot, the variable j is 0.

Next, the order specifying unit 60 determines whether or not the variable j is smaller than the number of slots (step S12). With this process, it is possible to determine whether or not the work of the work group having the i-th priority order is specified for all the slots.

In a case where "Yes" is determined in step S12, the order specifying unit 60 focuses on each slot, and calculates an appearance probability of each work of the work group having the i-th priority order by using a target tracking method (step S13). For example, the appearance probability is calculated as feeding times x basic value - (the number of times the work is selected up to that time), for each work. For example, when the i-th priority order is assigned to the work group A, the appearance probabilities of the work A1, the work A2, and the work A3 are calculated.

Next, the order specifying unit 60 creates a combination of works from the first priority order to the (i-1)-th priority order registered in the slot j (step S14). The created combination is denoted by cond_group$_{j,i}$. For example, in a case where i is 3 and j = 3, a combination (for example, A1, B2, and the like) of the works of the work groups having the first and second priority orders registered in the slot 3 is created.

Next, the order specifying unit 60 extracts an element having cond_group$_{j,i}$ as a subset among elements of cond_group, and creates a set candidate of work groups having the i-th priority order, from the elements (step S15). For example, when cond_group$_{j,i}$ created in step S14 is A1B2, work patterns A1B2C1, A1B2C2, and A1B2C3 are extracted from cond_group in FIG. 11.

Next, the order specifying unit 60 registers an element having the highest appearance probability among the elements of the set candidate in the slot j (step S16).

Next, the order specifying unit 60 adds 1 to the variable j (step S17). After that, the execution is performed again from step S12.

In a case where "No" is determined in step S12, the order specifying unit 60 adds 1 to the variable i. After that, the execution is performed again from step S10.

In a case where "No" is determined in step S10, the order specifying unit 60 refers to prod2cond_map stored in the work pattern storage unit 30, allocates the corresponding product to each slot, and adds the product to the array result_set (step S18).

Next, the order specifying unit 60 adds 1 to the loop count loop_count (step S19). After that, the execution is performed again from step S6.

In a case where "No" is determined in step S6, the output unit 80 outputs all the solutions having the KPI equal to or higher than a threshold value, among the solutions stored in the array result_set (step S20). After that, the execution of the flowchart is ended. Whether or not the KPI of the solution is equal to or higher than the threshold value is determined by the determination unit 70.

For example, the following equation may be used as the KPI. The following equation outputs a variance of a selection interval of each work, in each work group. As the output of the following equation is closer to 0, the selection interval of each work in each work group is substantially fixed, and local congestion in the feeding order is suppressed. Therefore, when a reciprocal number of the following equation is used as the KPI, a solution having a KPI equal to or higher than the threshold value is an appropriate solution.

$$\sum_{\substack{spec\_group \in \\ spec\_group\_list}} \sum_{\substack{spec \in \\ spec\_group}} \frac{\sum_{i=0}^{\#(spec)-1} \left( index(spec, i+1) - index(spec, i) - \sum_{j=0}^{\#(spec)-1} \frac{index(spec, j+1) - index(spec, j)}{\#(spec)} \right)^2}{\#(spec)}$$

In the equation described above, $spec_{group}$ means a work group, and spec means each work (for example, A1, B1, ...). #(spec) is the number of products having spec. Index(spec, i) is an index of an i-th product having spec in an input product string.

According to the present embodiment, it is possible to specify an order of works in a work group for each priority order in accordance with the priority order of a plurality of priority order patterns, and specify an order of products corresponding to a combination of the respective specified works. In this manner, trial and error in equalizing the frequency of each work is automatically performed. Therefore, the number of man-hours such as introduction of a weighting coefficient individually by a user for each work may be omitted, and a feeding order to a work line may be planned while suppressing the number of man-hours of the user.

By using the target tracking method when specifying the order of the works in the work group, it is possible to easily equalize the frequency of each work.

The solution may be presented to the user by repeating a series of processes of generating a plurality of priority order patterns and specifying a feeding order of products a plurality of times, and outputting the feeding order obtained in each of the series of processes. At this time, it is possible to present an optimum solution to the user by outputting the obtained order with which the variance of the intervals at which each work in the work group is performed is less than the threshold value.

Although the priority order pattern is randomly generated in the example described above, the embodiment is not limited thereto. For example, the priority order pattern may be generated in accordance with the priority order patterns generated up to that time and a quality of the obtained optimum solution.

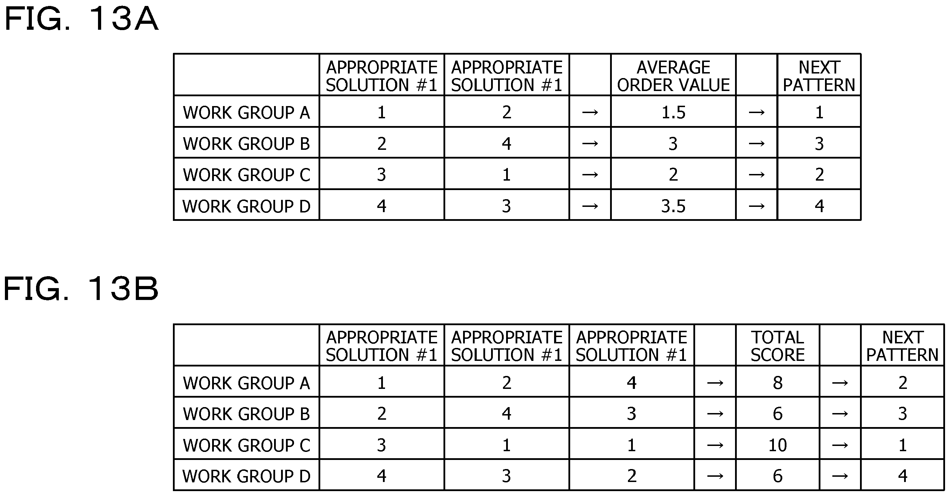

FIG. 13A is a diagram describing another example of the method of generating the priority order pattern. For example, as illustrated in FIG. 13A, two priority order patterns with which an optimum solution is obtained may be extracted, and another priority order pattern may be generated based on an average order value of the priority order patterns. For example, the priority order may be determined in ascending order of the average order value. In this manner, it is possible to generate another priority order with which an optimum solution is obtained.

FIG. 13B is a diagram describing still another example of the method of generating the priority order pattern. For example, as illustrated in FIG. 13B, each work group may be specified in accordance with a quality of an optimum solution, and a priority order pattern may be generated based on the specification. For example, a first priority order is set to 4 points, a second priority order is set to 3 points, a third priority order is set to 2 points, and a fourth priority order is set to 1 point, and a total score of scores of the respective optimum solutions is calculated. A priority order may be determined in descending order of the total score.

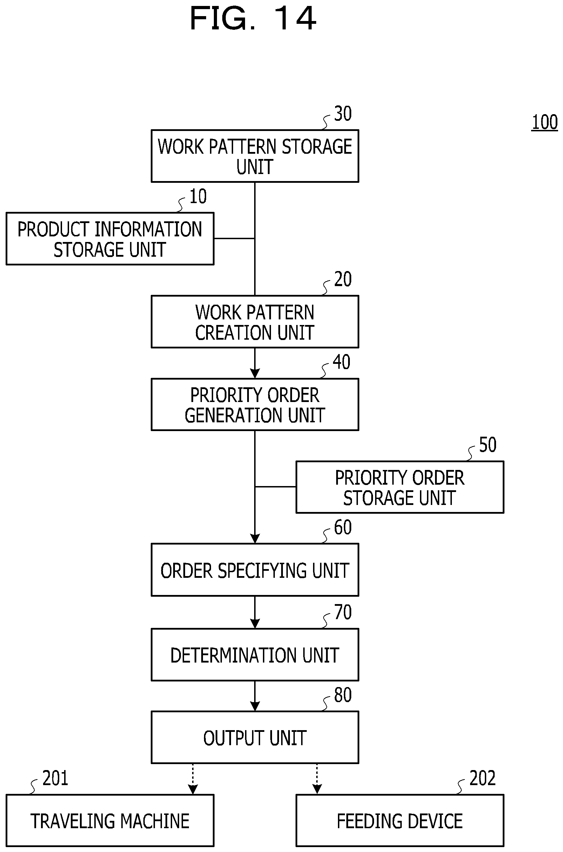

Although the result output by the output unit 80 is output to the display device 105 in each example described above, the result may be output to the traveling machine 201 that automatically travels in a warehouse. FIG. 14 is a block diagram illustrating this case. As illustrated in FIG. 14, a result output by the output unit 80 is output to the traveling machine 201 and the feeding device 202. The traveling machine 201 collects products from a component product case on each component shelve such that a feeding order received from the output unit 80 is realized. The result output by the output unit 80 may be output to the feeding device 202. In this case, the feeding device 202 sequentially feeds each set of each product type into a work line in accordance with a designated feeding order. The traveling machine 201 includes a CPU, a RAM, a storage device, and the like, and for example, a control program or the like for controlling a traveling route or the like of the traveling machine 201 is stored in the storage device, order information indicating a feeding order received from the output unit 80 is stored in the RAM, and the CPU controls an operation of the traveling machine 201 based on the control program and the order information. The feeding device 202 includes a CPU, a RAM, a storage device, and the like, and for example, a control program or the like for controlling a feeding process or the like to be executed by the feeding device 202 is stored in the storage device, order information indicating the feeding order received from the output unit 80 is stored in the RAM, and the CPU controls an operation of the feeding device 202 based on the control program and the order information.

For each example described above, a product is an example of an object to be fed into a work line in accordance with a predetermined order. The priority order generation unit 40 is an example of a priority order generation unit that generates a plurality of priority order patterns in which priority orders are assigned to a plurality of work groups, under a condition in which processes respectively selected from the plurality of work groups are sequentially performed on each of a plurality of objects. The order specifying unit 60 is an example of an order specifying unit that specifies an order of processes in the work group for each priority order according to the priority orders of the plurality of priority order patterns, and specifies an order of the plurality of objects corresponding to a combination of the respective specified processes. The output unit 80 is an example of an output unit that outputs, when a series of processes of generates a plurality of the priority order patterns and specifying an order of the objects is repeated a plurality of times, the order of the objects obtained in each of the series of processes.

Although the embodiments of the present disclosure have been described above in detail, the present disclosure is not limited to such particular embodiments and may be variously modified and changed within the scope of the gist of the present disclosure described in claims.

**Claims**

1.  A planning program that causes at least one computer to execute a process, the process comprising:

    generating a plurality of priority order patterns in which priority orders are assigned to a plurality of work groups, when processes selected from the plurality of work groups are sequentially performed on each of a plurality of objects;
    specifying an order of processes in the work group for each of the priority orders according to the priority orders of the plurality of priority order patterns; and
    specifying an order of the plurality of objects corresponding to the specified order of processes.

2.  The planning program according to claim 1, wherein the specifying the order of the processes in the work group includes:

    acquiring a ratio of the number of processes for each process to the total number of the objects, for each process in the work group;
    calculating an appearance probability obtained by subtracting the number of times the process is selected, from a product of a process number and the ratio; and
    selecting a next process by using the appearance probability.

3.  The planning program according to claim 1 or 2, wherein the process further comprising
    when a series of the generating and the specifying the order of the plurality of objects is repeated a plurality of times, outputting the order of the plurality of objects obtained in each of the series of processes.

4.  The planning program according to claim 3, wherein the outputting includes outputting an order with which a variance of intervals at which each process in the work group is performed is less than a threshold value, among orders.

5.  The planning program according to any one of claims 1 to 4, wherein the generating includes generating the priority order pattern in random.

6.  The planning program according to claim 3 or 4, wherein the generating includes generating a next priority order pattern according to the order of the plurality of objects obtained in each of the series of processes.

7.  A planning method executed by a computer, the planning method comprising:

    generating a plurality of priority order patterns in which priority orders are assigned to a plurality of work groups, when processes selected from the plurality of work groups are sequentially performed on each of a plurality of objects;
    specifying an order of processes in the work group for each of the priority orders according to the priority orders of the plurality of priority order patterns; and
    specifying an order of the plurality of objects corresponding to the specified order of processes.

8.  The planning method according to claim 7, wherein the specifying the order of the processes in the work group includes:

acquiring a ratio of the number of processes for each process to the total number of the objects, for each process in the work group;

calculating an appearance probability obtained by subtracting the number of times the process is selected, from a product of a process number and the ratio; and

selecting a next process by using the appearance probability.

9. The planning method according to claim 7 or 8, further comprising
when a series of the generating and the specifying the order of the plurality of objects is repeated a plurality of times, outputting the order of the plurality of objects obtained in each of the series of processes.

10. The planning method according to claim 9, wherein the outputting includes outputting an order with which a variance of intervals at which each process in the work group is performed is less than a threshold value, among orders.

11. The planning method according to any one of claims 7 to 10, wherein the generating includes generating the priority order pattern in random.

12. The planning method according to claim 9 or 10, wherein the generating includes generating a next priority order pattern according to the order of the plurality of objects obtained in each of the series of processes.

13. An information processing apparatus comprising:

a priority order generation unit that
generates a plurality of priority order patterns in which priority orders are assigned to a plurality of work groups, when processes selected from the plurality of work groups are sequentially performed on each of a plurality of objects; and
an order specifying unit that:

specifies an order of processes in the work group for each of the priority orders according to the priority orders of the plurality of priority order patterns, and
specifies an order of the plurality of objects corresponding to the specified order of processes.

# FIG. 1

TO OTHER BASE

TO CUSTOMER

SHIPPING

FACTORY

FEEDING DEVICE

202

201

WAREHOUSE

# FIG. 2

| PRODUCT F | PRODUCT E | PRODUCT D | PRODUCT C | PRODUCT B | PRODUCT A |
|-----------|-----------|-----------|-----------|-----------|-----------|
| A3 | A2 | A3 | A2 | A1 | A1 |
| B2 | B2 | B1 | B1 | B2 | B1 |

LOCATION AT WHICH WORK A IS PERFORMED

LOCATION AT WHICH WORK B IS PERFORMED

LINE

EP 4 213 082 A1

# FIG. 3A

■ WORK GROUP A: A1, A2, A3
■ WORK GROUP B: B1, B2

| PRODUCT F | PRODUCT C | PRODUCT B | PRODUCT D | PRODUCT E | PRODUCT A |
|-----------|-----------|-----------|-----------|-----------|-----------|
| A3 | A2 | A1 | A3 | A2 | A1 |
| B2 | B1 | B2 | B1 | B2 | B1 |

LINE FLOWING DIRECTION →

# FIG. 3B

■ WORK GROUP A: A1, A2, A3
■ WORK GROUP B: B1, B2

| PRODUCT F | PRODUCT E | PRODUCT D | PRODUCT C | PRODUCT B | PRODUCT A |
|-----------|-----------|-----------|-----------|-----------|-----------|
| A3 | A2 | A3 | A2 | A1 | A1 |
| B2 | B2 | B1 | B1 | B2 | B1 |

LINE FLOWING DIRECTION →

# FIG. 4A

|        | BASIC VALUE |
|--------|-------------|
| $A_1B_1$ | 1/2(4/8) |
| $A_1B_2$ | 1/4(2/8) |
| $A_2B_2$ | 1/8(1/8) |
| $A_2B_2$ | 1/8(1/8) |

# FIG. 4B

| INDEX | $A_1B_1$ | $A_1B_2$ | $A_2B_2$ | $A_2B_2$ |
|-------|----------|----------|----------|----------|
| 1 | 0.5 | 0.25 | 0.125 | 0.125 |
| 2 | 0 | 0.5 | 0.25 | 0.25 |
| 3 | 0.5 | -0.25 | 0.375 | 0.375 |
| 4 | 0 | 0 | 0.5 | 0.5 |
| ... | ... | ... | ... | ... |

# FIG. 4C

OUTPUT: $A_1B_1 \rightarrow A_1B_2 \rightarrow A_2B_3 \rightarrow A_2B_2 \rightarrow A_1B_1 \rightarrow A_1B_2 \rightarrow A_1B_1$

# FIG. 5

| | PRIORITY ORDER PATTERN | | | |
|---|---|---|---|---|
| | #1 | #2 | #3 | ⋯ |
| WORK GROUP A | 1 | 2 | 3 | ⋯ |
| WORK GROUP B | 2 | 4 | 4 | ⋯ |
| WORK GROUP C | 3 | 1 | 2 | ⋯ |
| WORK GROUP D | 4 | 3 | 1 | ⋯ |

SOLUTION #1   SOLUTION #2   SOLUTION #3

# FIG. 6

| SLOT 1 |
|---|
| WORK GROUP A = ? |
| WORK GROUP B = ? |
| WORK GROUP C = ? |

| SLOT 2 |
|---|
| WORK GROUP A = ? |
| WORK GROUP B = ? |
| WORK GROUP C = ? |

⋮

| SLOT N |
|---|
| WORK GROUP A = ? |
| WORK GROUP B = ? |
| WORK GROUP C = ? |

➡

| SLOT 1 |
|---|
| WORK GROUP A = A1 |
| WORK GROUP B = ? |
| WORK GROUP C = ? |

| SLOT 2 |
|---|
| WORK GROUP A = A2 |
| WORK GROUP B = ? |
| WORK GROUP C = ? |

⋮

| SLOT N |
|---|
| WORK GROUP A = A1 |
| WORK GROUP B = ? |
| WORK GROUP C = ? |

➡

| SLOT 1 |
|---|
| WORK GROUP A = A1 |
| WORK GROUP B = B1 |
| WORK GROUP C = C2 |

| SLOT 2 |
|---|
| WORK GROUP A = A2 |
| WORK GROUP B = B2 |
| WORK GROUP C = C1 |

⋮

| SLOT N |
|---|
| WORK GROUP A = A1 |
| WORK GROUP B = B3 |
| WORK GROUP C = C1 |

➡

PRODUCT A

PRODUCT E

⋮

PRODUCT C

EP 4 213 082 A1

FIG. 7A

100

WORK PATTERN STORAGE UNIT — 30

PRODUCT INFORMATION STORAGE UNIT — 10

WORK PATTERN CREATION UNIT — 20

PRIORITY ORDER GENERATION UNIT — 40

PRIORITY ORDER STORAGE UNIT — 50

ORDER SPECIFYING UNIT — 60

DETERMINATION UNIT — 70

OUTPUT UNIT — 80

FIG. 7B

100

CPU — 101

RAM — 102

DISPLAY DEVICE — 105

STORAGE DEVICE — 103

INPUT DEVICE — 104

# FIG. 8

START

CREATE WORK PATTERN prod2cond_map FOR EACH PRODUCT — S1

EXTRACT ALL WORK PATTERNS AND CREATE cond_group — S2

SPECIFY NUMBER M OF WORK GROUPS — S3

result_set←Φ (EMPTY SET) — S4

loop_count ← 0 — S5

S6
loop_count < N
NO          YES → (A)

(B)

loop_count ← loop_count + 1 — S19

PRESENT ALL SOLUTIONS HAVING KPI EQUAL TO OR HIGHER THAN THRESHOLD VALUE AMONG SOLUTIONS STORED IN result_set — S20

END

# FIG. 9

(A)

GENERATE PRIORITY ORDER PATTERN OF WORK GROUP ⟋ S7

GENERATE SLOTS BY TOTAL NUMBER OF PRODUCTS ⟋ S8

$i \leftarrow 1$ ⟋ S3

$i \leftarrow i+1$ ⟋ S

NO

$i < M+1?$ ⟋ S10

YES

$j \leftarrow 0$ ⟋ S11

$j \leftarrow j+1$ ⟋ S17

$j < $ NUMBER OF SLOTS? ⟋ S12   NO

YES

CALCULATE APPEARANCE PROBABILITY OF EACH WORK OF WORK GROUP HAVING PRIORITY ORDER $i$ BY USING TARGET TRACKING METHOD ⟋ S13

CREATE WORK COMBINATION OF WORK GROUPS WITH PRIORITY ORDERS 1 TO $(i-1)$ REGISTERED IN SLOT $j$ ⟋ S14

EXTRACT ELEMENT HAVING cond_group$_{j,i}$ AMONG ELEMENTS OF cond_group AS SUBSET, AND CREATE SET candidate OF WORK GROUPS HAVING PRIORITY ORDER $i$ ⟋ S15

REGISTER ELEMENT HAVING HIGHEST APPEARANCE PROBABILITY AMONG ELEMENTS OF candidate IN SLOT $j$ ⟋ S16

ALLOCATE PRODUCT TO EACH SLOT BY USING prod2cond_map AND ADD PRODUCT TO result_set ⟋ S18

(B)

# FIG. 10

|  | WORK PATTERN |
|---|---|
| PRODUCT 1 | A1B1C1 |
| PRODUCT 2 | A1B1C2 |
| PRODUCT 3 | A3B2C1 |
| PRODUCT 4 | A1B3C2 |
| PRODUCT 5 | A2B1C1 |
| PRODUCT 6 | A2B1C3 |
| PRODUCT 7 | A2B2C1 |
| PRODUCT 8 | A2B2C2 |
| PRODUCT 9 | A1B1C1 |
| PRODUCT 10 | A1B1C1 |
| PRODUCT 11 | A2B1C2 |
| PRODUCT 12 | A3B3C3 |
| … | … |

# FIG. 11

| WORK PATTERN |
| --- |
| A1B1C1 |
| A1B1C2 |
| A1B1C3 |
| A1B2C1 |
| A1B2C2 |
| A1B2C3 |
| A1B3C1 |
| A1B3C2 |
| A1B3C3 |
| A2B1C1 |
| A2B1C2 |
| A2B1C3 |
| A2B2C1 |
| A2B2C2 |
| A2B2C3 |
| A2B3C1 |
| A2B3C2 |
| A2B3C3 |
| A3B1C1 |
| A3B1C2 |
| A3B1C3 |
| A3B2C1 |
| A3B2C2 |
| A3B2C3 |
| A3B3C1 |
| A3B3C2 |
| A3B3C3 |

# FIG. 12

|  | #1 | #2 | #3 | ⋯ |
|---|---|---|---|---|
| WORK GROUP A | 1 | 2 | 3 | ⋯ |
| WORK GROUP B | 2 | 1 | 1 | ⋯ |
| WORK GROUP C | 3 | 3 | 2 | ⋯ |

## FIG. 13A

| | APPROPRIATE SOLUTION #1 | APPROPRIATE SOLUTION #1 | | AVERAGE ORDER VALUE | | NEXT PATTERN |
|---|---|---|---|---|---|---|
| WORK GROUP A | 1 | 2 | → | 1.5 | → | 1 |
| WORK GROUP B | 2 | 4 | → | 3 | → | 3 |
| WORK GROUP C | 3 | 1 | → | 2 | → | 2 |
| WORK GROUP D | 4 | 3 | → | 3.5 | → | 4 |

## FIG. 13B

| | APPROPRIATE SOLUTION #1 | APPROPRIATE SOLUTION #1 | APPROPRIATE SOLUTION #1 | | TOTAL SCORE | | NEXT PATTERN |
|---|---|---|---|---|---|---|---|
| WORK GROUP A | 1 | 2 | 4 | → | 8 | → | 2 |
| WORK GROUP B | 2 | 4 | 3 | → | 6 | → | 3 |
| WORK GROUP C | 3 | 1 | 1 | → | 10 | → | 1 |
| WORK GROUP D | 4 | 3 | 2 | → | 6 | → | 4 |

# FIG. 14

100

WORK PATTERN STORAGE UNIT — 30

PRODUCT INFORMATION STORAGE UNIT — 10

WORK PATTERN CREATION UNIT — 20

PRIORITY ORDER GENERATION UNIT — 40

PRIORITY ORDER STORAGE UNIT — 50

ORDER SPECIFYING UNIT — 60

DETERMINATION UNIT — 70

OUTPUT UNIT — 80

TRAVELING MACHINE — 201

FEEDING DEVICE — 202

# EP 4 213 082 A1

Europäisches
Patentamt

European
Patent Office

Office européen
des brevets

**EUROPEAN SEARCH REPORT**

Application Number

EP 22 19 8686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/186551 A1 (FUJITSU LTD [JP]) 23 September 2021 (2021-09-23) * figures 3, 5, 7-9 * & US 2022/350316 A1 (YAMAZAKI TAKASHI [JP]) 3 November 2022 (2022-11-03) * figures 3B, 5B, 5C, 7A-9C * * paragraphs [0005], [0018], [0038], [0047], [0048], [0053] – [0068] * | 1–13 | INV. G06Q10/0631 G06Q50/04 |
| A | JP 2019 175215 A (TOYOTA MOTOR CORP) 10 October 2019 (2019-10-10) * figures 1-7 * * paragraphs [0002], [0008] – [0011], [0016] – [0019], [0027] * | 1–13 | |

----- 

TECHNICAL FIELDS
SEARCHED      (IPC)

G06Q

The present search report has been drawn up for all claims

| Place of search | Date of completion of the search | Examiner |
|---|---|---|
| Munich | 30 May 2023 | Abdel Jaber, Wael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 8686

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2023

| Patent document cited in search report | | Publication date | Patent family member(s) | | Publication date |
|---|---|---|---|---|---|
| WO 2021186551 | A1 | 23-09-2021 | CN | 115053248 A | 13-09-2022 |
| | | | EP | 4123554 A1 | 25-01-2023 |
| | | | JP | WO2021186551 A1 | 23-09-2021 |
| | | | US | 2022350316 A1 | 03-11-2022 |
| | | | WO | 2021186551 A1 | 23-09-2021 |
| JP 2019175215 | A | 10-10-2019 | JP | 7006447 B2 | 24-01-2022 |
| | | | JP | 2019175215 A | 10-10-2019 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4281556 A
- JP 6110901 A

- JP 2008198129 A